# Europäisches Patentamt

# European Patent Office

# Office européen des brevets

(11) Veröffentlichungsnummer: **0 144 554**
**A2**

## EUROPÄISCHE PATENTANMELDUNG

(21) Anmeldenummer: **84110544.8**

(22) Anmeldetag: **05.09.84**

(51) Int. Cl.⁴: **G 05 G 5/06**

(30) Priorität: **13.09.83 PC T/LU83/00240**

(43) Veröffentlichungstag der Anmeldung:
**19.06.85 Patentblatt 85/25**

(84) Benannte Vertragsstaaten:
**DE FR GB IT SE**

(71) Anmelder: **ZAHNRADFABRIK FRIEDRICHSHAFEN AKTIENGESELLSCHAFT**
**Löwentaler Strasse 100 Postfach 2520**
**D-7990 Friedrichshafen 1(DE)**

(72) Erfinder: **Osterloff, Kurt**
**Steffelinweg 6**
**D-7990 Friedrichshafen(DE)**

(72) Erfinder: **Heinzelmann, Karl-Fritz**
**Finkenstrasse 11**
**D-7996 Meckenbeuren(DE)**

(74) Vertreter: **Raue, Reimund**
**Zahnradfabrik Friedrichshafen AG Löwentaler Strasse 100 Postfach 2520**
**D-7990 Friedrichshafen 1(DE)**

(54) Rastierung in einer Gangschalteinrichtung.

(57) Rastierung in einer Gangschalteinrichtung eines Zahnräderwechselgetriebes für die Fixierung der Neutralstellung und der Gangendstellungen, wobei ein im Schaltgehäuse (5) geführtes und gefesseltes Rastelement (3) unter der Wirkung einer Feder (4) gegen ein Betätigungsglied (2), das auch Schaltkupplungen, betätigt gedrückt wird, wobei das entsprechend gestaltete Rastelement in der Neutralstellung in eine Kerbe (21) dieses Schaltfingers einrastet und in der oder den Endstellungen es an der Außenkontur (22, 22A) bzw. weiteren Kerben zur Rastierung kommt. Wird das Rastelement (3) beim Verstellen des Schaltfingers (2) aus der Neutralstellung (N) in Richtung einer Gangendstellung (E) gedrückt, so wird dieses Element angehoben und führt eine Kippbewegung solange aus, bis der Schaltfinger (2) die Gangendstellung (E) erreicht hat. Das Rastelement (3) wird von Bolzen (6, 6A), die im Schaltgehäuse (5) befestigt sind, in Neutrallage und in den Gangendstellungen abgestützt, während beim Verstellen, also in der Kippbewegung, die Drehung um einen Bolzen mit einer sehr geringen Auflagekraft und einem kleinen Reibweg erfolgt. Infolge dieser Kippbewegung wird eine sehr leichtängige Schaltung mit einer sicheren Rastierung erzielt.

./...

ZAHNRADFABRIK FRIEDRICHSHAFEN
Aktiengesellschaft
Friedrichshafen                    1

01.44554
12S/p2-hg
Akte 05890        F
30.08.1983

## Rastierung in einer Gangschalteinrichtung

Diese Erfindung betrifft eine Rastierung in einer Gangschalteinrichtung nach dem Oberbegriff von Anspruch 1.
Eine solche Einrichtung ist z. B. aus der DE-PS 14 80 679 Fig. 1
und der Reparaturanleitung für das ZF-Synchroma-Getriebe® S 6-36,
Seite H 07.03.00.03, bekannt. In dieser Schalteinrichtung wird
über eine Schaltwelle ein Schaltfinger in die Neutralstellung und
in die Endstellung verstellt, wobei dieser eine Vertiefung hat, in
die das Rastelement unter der Wirkung z. B. einer Druckfeder in
der Neutrallage der Schaltkupplung und damit der Drehwelle eingreift. Das Rastelement ist im Schaltgehäuse geführt und wird bei
einer Betätigung des Schaltfingers - über Schalthebel und Drehwelle - entgegen dem Federdruck radial nach außen gedrückt. Der
Schaltfinger ist so gestaltet, daß in den Gangendstellungen die
Rastierung an der Außenkontur des Schaltfingers erfolgt.
Solche Einrichtungen garantieren eine zuverlässige Rastierung,
haben aber eine relativ große Reibung.

Es ist deshalb Aufgabe der Erfindung, eine Rastierung nach
dem Oberbegriff von Anspruch 1 in bezug auf Reibung zu optimieren
mit dem Ziel einer leichtgängigen Schaltung, ohne daß die Wirkung
der Rastierung sich verschlechtert, dabei soll die Einrichtung
einfach gestaltet werden und leicht montierbar sein.

Diese Aufgabe wird mit den kennzeichnenden Merkmalen von Anspruch 1 erfüllt.

Während beim Stand der Technik das Rastelement z. B. radial
geführt wird und z. B. der Schaltfinger dieses in der Führung gegen den Druck einer Feder radial nach außen drücken muß, was zu
einer relativ hohen Reibung durch Verkantungskräfte des Reibelementes führt, entsteht bei einer Kippbewegung nur eine geringe Reibung, weil die Reibkräfte und Reibwege nur in der Auflage, um die

ZAHNRADFABRIK FRIEDRICHSHAFEN
Aktiengesellschaft
Friedrichshafen                    2

01 44 554
Akte 05890      F
30.08.1983

die Kippbewegung erfolgt, sehr klein gehalten werden können. Das
Prinzip dieser Lösung - Kippen des Rastelementes bei einer Verstellung eines Betätigungsgliedes von der Neutralstellung in eine Gangendstellung - kann in Verbindung mit Schaltfingern als Betätigungselement wie auch z. B. mit Schaltschienen oder Schaltschwingen zur
Anwendung kommen.

Mit den Ansprüchen 2 bis 10 wird die Erfindung in vorteilhafter Weise ausgestaltet.

Werden nach den Ansprüchen 2 und 3 quer zu dem Schaltfinger
im Schaltgehäuse Stützen oder Bolzen angeordnet, so ergeben sich
einfache Führungen und eine minimierte Reibung beim Kippen dieses
Rastelementes.

Die Herstellung dieses Rastelementes ist auch in einfacher
Weise nach Anspruch 4 als Stanz-, Umform-, Sinter- oder auch
Druckgußteil, also ohne eine teure, spanabhebende Bearbeitung,
möglich. Durch die Verwendung von gelagerten Rollen oder Kugeln an
der Berührung mit dem Schaltfinger kann die Reibung dieser Rastierung noch weiter verbessert werden.
Obwohl sich diese Rastierung für alle denkbaren Schaltungen eignet, kann sie besonders günstig bei Schalteinrichtungen an Zahnräderwechselgetrieben eingesetzt werden, die noch eine Drehwelle
haben, wobei diese sowohl mit einem Schaltfinger, der mit der
Drehwelle mitverschoben wird (Anspruch 5) wie auch mit den Schaltstangen zugeordneten Schaltfingern ausgestattet sein kann (Anspruch 6). Jedem Schaltfinger sind dabei je eine Rastierung zugeordnet, wobei diese in den nicht geschalteten Gassen noch für die
Neutralstellungsfixierung der Schaltschienen und Schaltkupplungen
verwendet werden können. Eine besonders günstige Lösung ergibt
sich, wenn die Rastierung im Schaltgehäuse im Bereich der Schaltfinger einen gesonderten Deckel haben, in dem die gesamte Rastiereinrichtung (Ansprüche 7 bis 9) angeordnet ist, weil dadurch die
Montage und damit auch ein evtl. nötiger Austausch erleichtert
wird.

ZAHNRADFABRIK FRIEDRICHSHAFEN                    TZS/pz-hg
Aktiengesellschaft                              Akte 05890    F
Friedrichshafen                    3            30.08.1983

Bei einer Anordnung der Rastierung nach Anspruch 10 ist es nicht
nur möglich, den Schaltfinger in seiner Neutralstellung axial mit
der Drehwelle für die Wählbewegung zu verstellen und quer dazu für
eine Gangrastierung zur Wirkung zu bringen, sondern es sind auch
alle Bewegungsrichtungen denkbar, weil das Rastelement rund und
die Abstützung ringförmig gestaltet sind und damit der Drehpunkt
beim Kippen praktisch in jeder Lage liegen kann.

Aus der DE-PS 30 00 577, Fig. 2, ist eine Rastierung (Schaltrastierung 61) bekannt, bei der das Rastelement sich in axialer
Richtung bewegt. Bei dieser Ausführung treten jedoch die gleichen
Nachteile wie bei der bereits beschriebenen Bewegung des Rastelementes in radialer Richtung auf.

Weitere Einzelheiten der Erfindung werden anhand von Ausführungsbeispielen und anhand von Zeichnungen erläutert, wobei die
Einzelheiten der Zeichnung Gegenstand der Erfindung sind. Es
zeigen:

Fig. 1     einen Schnitt quer zur Drehwelle im Bereich der
           Rastierung für die Gangschaltung.

Fig. 2     einen Schnitt längs zur Drehwelle mit drei Schaltfingern und drei Rastierungen.

Fig. 3     einen Querschnitt durch ein rundes Rastelement mit
           einer ringartigen Abstützung und Führung.

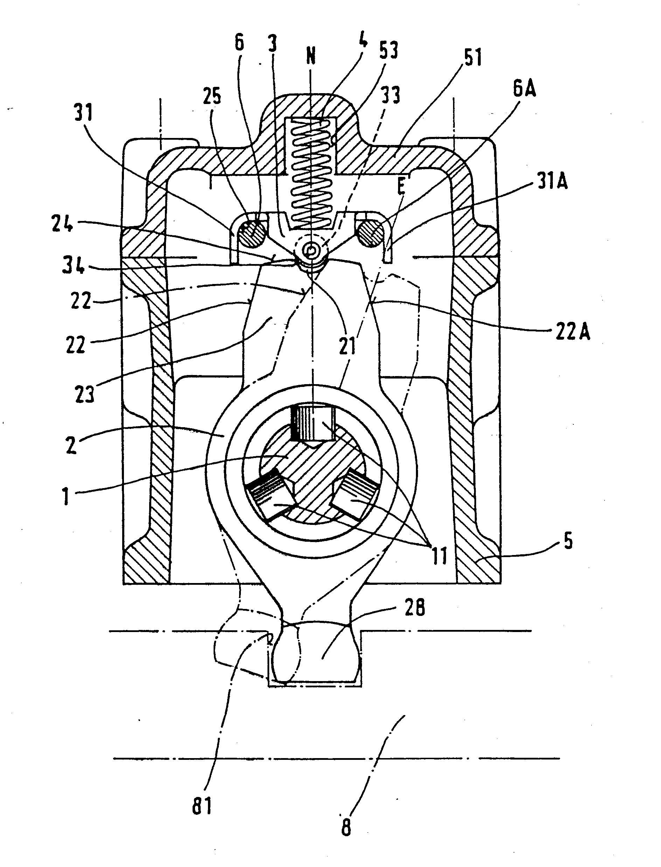

Fig. 1 zeigt einen Schnitt des Schaltgehäuses 5 quer zur
Drehwelle 1 mit einem Schaltfinger 2, in dessen Kerbe 21, die in
einem Arm 23 angebracht ist, die Rolle 33 eines Rastelementes 3
in der Neutralstellung N des Schaltfingers 2 eingreift. Das
Rastelement 3 wird von einer Druckfeder 4, die in einer Bohrung 53 des Deckels 51 gelagert ist und sich am Boden dieser Boh-

ZAHNRADFABRIK FRIEDRICHSHAFEN
Aktiengesellschaft
Friedrichshafen                          4

0144554

Akte 05890     F
30.08.1983

rung abstützt, in Richtung auf den Schaltfinger zu gedrückt und von zwei Bolzen 6, 6A so abgestützt, daß zwischen der Rolle 33 und der Begrenzung der Kerbe 21 ein kleiner Spalt 34 verbleibt. Der Schaltfinger 2 hat noch einen Finger 28, der in eine Ausnehmung 81 der Schaltschiene 8 eingreift.

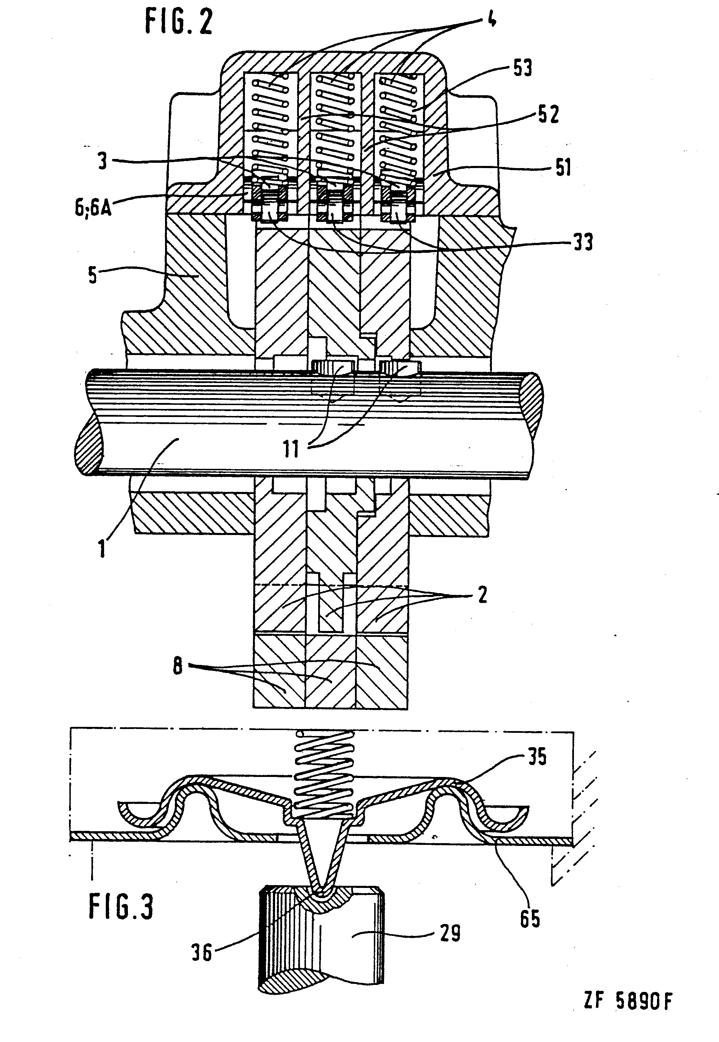

Aus dem Längsschnitt durch das Schaltgehäuse 5 (Fig. 2) ist die in diesem gelagerte Drehwelle 1 mit den Mitnehmern 11 für die drei Schaltfinger 2 zu sehen, wobei in jeder Gasse immer nur ein Mitnehmer 11 in Wirkverbindung mit je einem Schaltfinger 2 steht. Alle drei Rastenelemente 3 werden nur von zwei Bolzen 6, 6A abgestützt, während für jedes Rastenelement 3 eine Druckfeder 4 vorgesehen ist, die in Bohrungen 53, die im Deckel 51 angeordnet, gelagert sind. Die einzelnen Rastelemente 3 werden durch Rippen 52 des Deckels 51 geführt.

Die Rastierung wirkt wie folgt: Wird die Drehwelle 1 zum Schalten eines Ganges z. B. in Fig. 1 nach rechts gedreht, so nehmen die in dieser Gasse wirkenden, am Umfang verteilten Mitnehmer 11 den jeweiligen Schaltfinger 2 mit. Von der Begrenzung der Kerbe 21 wird, da der Spalt 34 zwischen Kerbe 21 und Rolle 33 sehr klein ist, auf die Rolle gedrückt, so daß sich das Rastelement 3 gegen die Wirkung der Feder 4 am Bolzen 6A abhebt, wobei sich neben einer geringfügigen Drehung der Rolle 33 und eine gleichfalls geringfügige Drehung um den Bolzen 6 ergibt. Die Führungslappen 31 garantieren auch eine Führung während der Kippbewegung. Ist die Gangendstellung erreicht, nachdem die Rolle 33 des Rastelementes 3 auf der radialen äußeren Begrenzung 24 des Armes 23 entlanggerollt ist, fällt diese an der Außenkontur 22 wieder nach radial innen, so daß sich das Rastenelement wieder auf dem Bolzen 6A abstützt. Anstelle von einer Druckfeder, die in der Mitte, also in der Ebene der Rolle, zwischen den beiden Bolzen angreift, können auch zwei Federn zum Einsatz kommen, die direkt im Bereich der jeweiligen Bolzen 6, 6A andrücken. Das Rastelement 3 kann

ZAHNRADFABRIK FRIEDRICHSHAFEN
Aktiengesellschaft
Friedrichshafen                    5

0144554
TZS/pz-hg
Akte 05890     F
30.08.1983

zur weiteren Verringerung der Reibung im Bereich der Berührungsfläche 25 mit den Bolzen 6, 6A schmaler ausgeführt sein. Anstelle
der Rolle 33 am Rastelement kann auch eine Nase angeformt oder
eine Kugel gelagert sein.

Während die Kippbewegung des Rastelementes 3 nach den
Fig. 1 und 2 nur in einer Ebene erfolgen kann, ist es bei anderen
Schaltanlagen, die keine Drehwelle aufweisen, nach Fig. 3 auch möglich, das Rastelement 35 rund mit einer Nase 36 in der Mitte so
auszuführen und die Abstützung und Führung 65 ringartig zu gestalten, so daß eine Kippbewegung des Rastelementes 35 in allen Richtungen möglich ist. In so einem Fall ist der Schaltfinger 29 rund
gestaltet und hat in seiner Mitte eine entsprechend rund gestaltete Kerbe.

ZAHNRADFABRIK FRIEDRICHSHAFEN
Aktiengesellschaft
Friedrichshafen

-6-

0144554
Akte 05890        F
30.08.1983

## Bezugszeichen

| | | |
|---|---|---|
| 1 | | Drehwelle |
| 11 | | Mitnehmer |
| 2 | | Betätigungsglied (z. B. Schaltfinger) |
| 21 | | Kerbe |
| 22, | 22A | Außenkontur |
| 23 | | Arm |
| 24 | | radial äußere Begrenzung |
| 25 | | Berührungsfläche |
| 28 | | Finger |
| 29 | | Schaltfinger rund |
| 3 | | Rastelement |
| 31, | 31A | Führungslappen |
| 32, | 32A | Auflagefläche |
| 33 | | Rolle |
| 34 | | Spalt |
| 35 | | Rastelement rund |
| 36 | | Nase |
| 4 | | Druckfeder |
| 5 | | Schaltgehäuse |
| 51 | | Deckel |
| 52 | | Rippen |
| 53 | | Bohrung |
| 6, | 6A | Bolzen |
| 65 | | Abstützung und Führung |
| 8 | | Schaltschienen |
| 81 | | Ausnehmung |
| | | |
| N | | Neutralstellung |
| E | | Gangendstellung |

ZAHNRADFABRIK FRIEDRICHSHAFEN
Aktiengesellschaft
Friedrichshafen

0144554
TZS/pz-hg
Akte 05890     F
30.08.1983

I

Rastierung in einer Gangschalteinrichtung

A n s p r ü c h e

1. Rastierung in einer Gangschalteinrichtung eines Zahnräderwechselgetriebes für die Fixierung der Neutralstellung und der
Gangendstellungen, wobei ein im Schaltgehäuse (5) geführtes und
gefesseltes Rastelement (3) unter der Wirkung mindestens einer
Feder (4) gegen ein Betätigungsglied - z. B. einen Schaltfinger (2) -, das auch Schaltkupplungen betätigt, gedrückt wird, wobei das entsprechend gestaltete Rastelement in der Neutralstellung
in eine Kerbe (21) dieses Betätigungsgliedes einrastet und in der
oder den Endstellungen es an der Außenkontur (22, 22A) bzw. weiteren Kerben zur Rastierung kommt, dadurch  g e k e n n z e i c h -
n e t ,   daß das Rastelement (3) beim Verstellen des Betätigungsgliedes (2) aus der Neutralstellung (N) in Richtung einer Gangendstellung (E) von diesem einseitig angehoben und solange gekippt
wird, bis das Betätigungsglied (2) die Gangendstellung (E) erreicht hat.

2. Rastierung nach Anspruch 1, dadurch  g e k e n n -
z e i c h n e t ,   daß das Rastelement (3) trägerartig auf zwei
am Schaltgehäuse befestigten Stützen (Bolzen 6, 6A) aufliegt, an
diesen geführt wird und beim Verstellen des Betätigungsgliedes in
eine Gangendstellung (E) um eine dieser Stützen kippt und sich von
der anderen Stütze (6A) abhebt.

3. Rastierung nach Anspruch 2, dadurch  g e k e n n -
z e i c h n e t ,   daß die Stützen quer zu einem Schaltfinger (2)
im Schaltgehäuse (5) angeordnete Bolzen (6, 6A) sind, die symmetrisch zu einer Kerbe (21), die mittig in einem Arm (23) des
Schaltfingers (2), in die in Neutralstellung auch das Rastelement (3) eingreift, liegen und daß das Rastelement (3) diesen

ZAHNRADFABRIK FRIEDRICHSHAFEN
Aktiengesellschaft
Friedrichshafen

0144554
TZS/pz-hg
Akte 05890    F
30.08.1983

2

Bolzen (6, 6A) zugeordnete Führungslappen (31, 31A) hat, die auch während der Kippbewegung noch wirken und daß eine sich am Deckel des Schaltgehäuses (5) abstützende Druckfeder (4) etwa mittig auf das Rastelement (3) drückt.

4. Rastierung nach Anspruch 4, dadurch  g e k e n n - z e i c h n e t ,   daß das Rastelement ein Stanz-, Umform-, Sinter- oder Druckgußteil ist, bei dem durch eine geringe Auflagefläche (32, 32A) an den Bolzen (6, 6A) und die Anordnung einer gelagerten Rolle (33) oder Kugel zum Eingriff in die Raststellungen (Kerbe 21) am Schaltfinger (2) die Reibung bei der Kippbewegung noch weiter reduziert ist.

5. Rastierung nach einem der Ansprüche 1 bis 4 und mit einer Schaltanlage, bei der am Getriebegehäuse noch eine Drehwelle (1) angeordnet ist, die zum Wählen der Gassen axial verschoben und zum Gangschalten verdreht wird, dadurch  g e k e n n z e i c h - n e t ,   daß zwischen der Rolle (33) oder Kugel oder auch einer Nase des Rastelementes (3) und dem Betätigungsglied, z. B. Schaltfinger (2), in der Rastierung der Neutralstellung (Kerbe 21) ein geringer Abstand vorhanden ist, so daß bei der Wählbewegung der Drehwelle (1) keine zusätzliche Reibung entsteht.

6. Rastierung nach Anspruch 5, dadurch  g e k e n n - z e i c h n e t ,   daß jeder Schaltschiene (8) ein Schaltfinger (2) und eine Rastierung (3) zugeordnet ist, wobei dieser Schaltfinger vom am Umfang verteilten Mitnehmern (11) der Drehwelle (1) zur Drehbewegung mitgenommen wird, während die übrigen Schaltfinger (2) und damit auch die Schaltschienen (8) und Schaltkupplungen über die jeweilige Rastierung in der Neutrallage gehalten werden.

7. Rastierung nach Anspruch 6, dadurch  g e k e n n - z e i c h n e t ,   daß die Rastelemente (3) die Feder (4) und die Bolzen (6, 6A) komplett in einem eigenen Deckel (51) im Bereich der Schaltfinger (2) am Schaltgehäuse (5) angeordnet sind, so daß sich eine günstige Montage ergibt.

ZAHNRADFABRIK FRIEDRICHSHAFEN
Aktiengesellschaft
Friedrichshafen

3

0144554
TZS/pz-hg
Akte 05890    F
30.08.1983

8. Rastierung nach Anspruch 7, dadurch  g e k e n n -
z e i c h n e t ,   daß die Führung der einzelnen Rastierungen in
Achsrichtung der Drehwelle (7) durch Rippen (52), die vorrangig
einteilig mit dem Deckel (51) der Rastierung sind, erfolgt und daß
die Federn (4) in Bohrungen (53) dieses Deckels (51) geführt werden.

9. Rastierung nach Anspruch 8, dadurch  g e k e n n -
z e i c h n e t ,   daß für mehrere Rastierungen (Rastelement 3
und Feder 4) nur zwei Bolzen (6, 6A) zur Abstützung der jeweiligen
Rastelemente (3) angeordnet sind.

10. Rastierung nach Anspruch 1, dadurch  g e k e n n -
z e i c h n e t ,   daß das Rastelement (35) in Draufsicht eine
runde Form hat, mit einer in der Mitte angeordneten Nase (36) oder
Kugel und mit einem runden Schaltfinger (25) zusammenwirkt und daß
die Abstützung und Führung (65) ringartig gestaltet ist, so daß
eine Kippbewegung des Rastelementes (35) in allen Richtungen möglich ist.

6  3  N  4  53
25    33  51  6A
31
E
24    31A
34
22    22A
22
23
21
2
1
11  5
28
81
8

ZF 5890 F

FIG. 2

FIG. 3

0144554

2/2

ZF 5890F